# EUROPEAN PATENT APPLICATION

(11) **EP 1 855 482 A2**
(43) Date of publication of application: **14.11.2007**
(21) Application number: 07251967.1
(22) Date of filing: 11.05.2007
(51) Int. Cl.: H04N 7/18

(54) **Video surveillance with satellite communication access**

(30) Priority: 11.05.2006 US 747005; 09.05.2007 US 746235
(71) Applicant: Agmon, Eran, Petah Tikva 49130 (IL)
(72) Inventor: Agmon, Eran, Petah Tikva 49130 (IL)
(74) Representative: Tombling, Adrian George

(57) **Abstract**

A satellite surveillance system and method of using comprising at least one analog video camera for recording a video stream in a remote location; an encoder connected to the analog video camera to convert the video stream to digital video information; a device to detect an anomaly in the vicinity of the analog video camera, a remote VSAT terminal connected to the encoder to transmit the digital video stream from the remote location to a satellite based on detection of an anomaly by the device to detect an anomaly; wherein the digital video stream is transmitted based on an algorithm to process bandwidth requests from the remote terminal; and a hub processing center for receiving the digital video information, wherein digital video information may be received from a plurality of digital video streams from different remote locations.

## Description

### FIELD OF THE INVENTION

The present invention relates to a video surveillance system having cameras at various remote sites and satellite communication with the cameras.

### BACKGROUND OF THE INVENTION

Current video surveillance solutions have an expensive means to communicate video data from remote sites to a central location and to control from the central location to the remote cameras. The connection between the central location and the remote cameras must support high data rates to provide the required video quality. Most applications seldom need high resolution video, and the need for high resolution video is usually a function of some alarm trigger.

In today's era of homeland security, a very large number - tens of thousands - of elements of the country's infrastructure for power, water supply, waste treatment, transportation etcetera are of strategic importance: sabotage of one of them, let alone a coordinated attack on several, may very well have significant economical consequences on a large territory, and an even greater psychological impact.

The catastrophic events of September 11, 2001, and the failure of the US Northeast electrical grid on August 8, 2003, have highlighted how much the nation depends on its critical infrastructure.

Harming remote, unmanned infrastructure facilities, e.g., power plants, fuel storage facilities, water facilities, and oil and gas exploration and production facilities can trigger a chain of events resulting in a widespread loss of electrical power, large scale environmental damage, and risk to large populations.

Many of these infrastructure elements are located, by their very nature, at remote sites away from populated areas - either because they need to be adjacent to natural resources or because safety dictates so. This, and their large number, makes their security a particularly daunting challenge, and is the reason why so many infrastructure elements - the large majority in fact - remain to this day completely lacking in security beyond the most rudimentary physical measures such as fences and gates. Keeping these sites secure is a serious challenge in this day and age, and is usually solved by higher manpower costs.

Video surveillance - the monitoring of an area through a network of video cameras that are controlled and viewed by an operator at a central location - has become in recent years an indispensable security tool. Unfortunately, however, existing solutions are limited in one crucial aspect: they are all architected in a way that assumes the close proximity of a human operator to the monitored site. While this operator may very efficiently monitor a relatively large area through multiple cameras, today's technology assumes that the distance between operator and camera is small enough to be spanned by a high-speed Local Area Network (LAN), or in less common circumstances a high speed Metropolitan Area Network (MAN), so that the high-bandwidth video signals from the cameras can be communicated continuously and in real time to the operator.

Such systems require an always-on, high-speed data connection between the operator and each video camera, effectively limiting their usefulness to relatively small areas that are manned on-site around the clock (24/7). This approach is of course impractical for the kind of sites described above: local operator presence is prohibitively expensive, as are broadband communications links for the video signals from security cameras. A vast number of critical sites are located in remote areas where broadband communication doesn't exist, and the cost of providing terrestrial communication, as well as the time needed to implement such communication, to these sites is prohibitive.

### SUMMARY

Aspects of the invention are directed to satellite surveillance systems and methods of operating such satellite surveillance systems.

Further aspects relate to detecting an anomaly in the vicinity of a video camera and transmitting video stream data obtained from the camera via satellite to a central hub based on the detection of the anomaly.

### BRIEF DESCRIPTION OF THE DRAWINGS

FIG. 1 is a schematic view of an embodiment of a video surveillance system using satellite communications.

FIG. 2 is a schematic view of an alternative embodiment of a video surveillance system using satellite communications.

### DESCRIPTION

Illustrative aspects of the invention will be described in detail below with reference to the accompanying drawings. These aspects merely provide examples of the invention, and it is needless to say that the aspects can be suitably modified without departing from the gist of the invention.

The present invention combines local and remote control elements, and makes judicious use of the ubiquitous, albeit modest speed, of satellite communications medium. Satellite communication provides immediate communication at a lower cost than prior systems. Any location under the satellite's footprint can be served with a very high level of performance and reliability, and satellite is an independent, highly immune communication infrastructure.

A security framework and a system of implementing the framework will make it economically and operationally feasible to meet the security requirements of a distributed infrastructure. Such a system will enable an operator, or a small number of operators, to centrally monitor from a distance in real time and with excellent visibility a large number of remote sites in a way that is both effective and economically attractive.

The combined satellite communication and video surveillance of the invention can address the specific need of protecting remote sites. The system is designed and built for prolonged, maintenance-free, unsupervised indoor and/or outdoor operation. The system provides everything required to monitor, store, and transmit visual and audio information to the desired destination, as well as to allow implementation of pro-active measures.

Video information is, by nature, high bandwidth and remote transmission of video information is expensive. The present invention proposes an efficient and inexpensive way for the communication of video information. For example, a plurality of video cameras are located at remote locations and used to detect and watch unusual situations or conditions. High quality video is recorded locally for future retrieval. Either no video or a low-rate video is transmitted from the remote site, e.g. a still picture once every 10 seconds.

Additional sensors, as well as image processing software, are employed in order to detect abnormal conditions. Once detected, the unit at the remote location generates a request for a dedicated transmission channel. This request is processed at the hub of the communication system, which in return grants transmission parameters. From this moment on, full rate video is transmitted from the remote site.

This method allows the efficient use of dynamically allocated, managed common pool of bandwidth and time resources instead of an expensive dedicated channel per remote site.

Video data from various cameras at a remote site is digitized at the proximity of the camera, and passed to a Remote Satellite Communication Terminal by wiring, or by some wireless connection such as WiFi, or WiMax.

The collected video data from the remote sites is concentrated at a remote satellite communication terminal, and is further transmitted, as is or encrypted, via a satellite to a central satellite communication terminal that collects all video data from all remote sites.

The remote sites usually send low-rate video images, such as frame scan once a second or don't transmit any picture at all. A trigger may turn the transmission on, or change the video source to move into a higher rate of frames per second. To support rate changes, the satellite network has a bandwidth-request and bandwidth grant mechanism, between remote satellite communication terminals and central satellite communication terminals. A remote location may up-speed video data rate when any alarm is set, or when a request for rate-change is initiated by a central satellite communication terminal, or locally at the remote site. Alarms often include video motion detection software, based on image processing.

Two-way communication between remote and central satellite communication terminals, and two-way communication between the remote satellite terminal and the cameras allow remote control of cameras (such as zooming, and panning / tilting the camera) from a single center. The flexible usage of satellite bandwidth ("BW") between sites by the usage of a shared bandwidth pool and a bandwidth request/grant mechanism, allow efficient satellite bandwidth usage, corresponding to traffic average rates over the entire network, as opposed to worst-case highest data rate per every remote site.

The very nature of satellite communication - ubiquitous presence and rapid deployment - makes satellite communication the preferred choice for use in protecting remote sites. The present invention provides an independent terminal for Audio/Video (A/V) surveillance that is capable of self-operation at remote sites, using broadband satellite communication. Such a system will provide prolonged, maintenance-free, unsupervised outdoor operation, and include everything required to monitor, store and transmit visual and audio information to the desired destination, as well as providing proactive measures.

The system may enable operators of critical infrastructures faculties, US armed forces and US law enforcement forces to implement a new security policy for remote, often unmanned, infrastructure sites. The 'Remote Site Protection Concept' (RSPC) will enable a small workforce to effectively manage and operate the security of large number of remote sites. The use of RSPC will provide deterrence of potential hostile attacks just by its mere presence. RSPC is cost effective by allowing a small number of security personnel to control, manage and maintain quality protection for a considerable number of remote sites which otherwise would have required personnel intensive solutions. RSPC also minimizes security issues associated with hiring new personnel for securing sensitive sites - as the RSPC allows effective security with a small number of workers. Such minimizing of staff will save costs associated with obtaining security clearance and will minimize the security risk that may arise from the workers themselves. Since the RSPC is designed for prolonged, unsupervised operation, the required training and education is minimal and not different from the training required for ordinary guard personnel

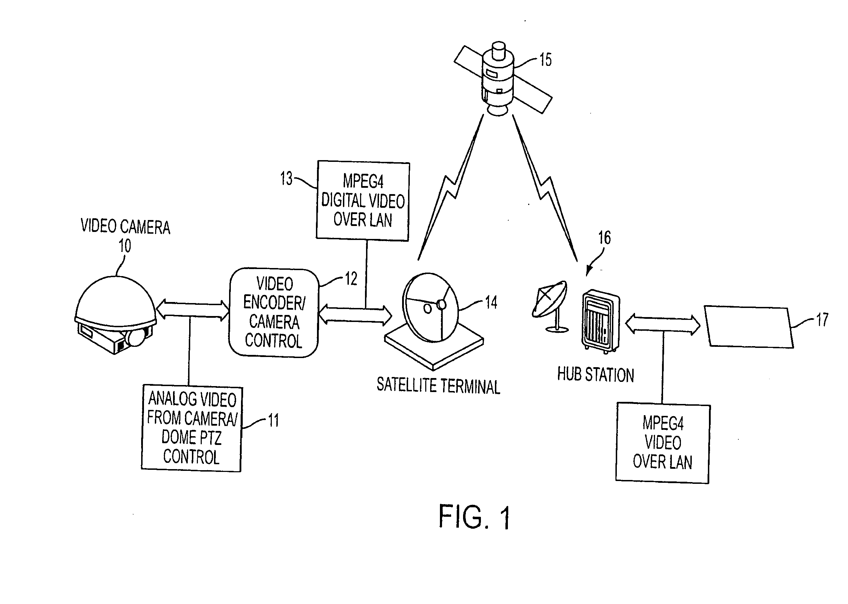

FIG. 1 is a schematic view of a video surveillance system using satellite communications in accordance with one aspect of the invention. In particular, FIG. 1 shows the main hardware components and the nature of signals that runs between them. A video camera (10) is placed at the desired site. In this case, the video camera provides analog video output (11). A video encoder (12) converts the analog output of the camera (10) into digital information (13) which is then transmitted via LAN (for example) to a satellite terminal (VSAT) (14). The MPEG4 standard for digital information is particularly suitable. The VSAT terminal transmits the digital information to a satellite (15) which in turn transmits the digital information to a HUB station (16). The HUB station (16) then transfers the information via LAN (for example) to the Manned Central Office (MCU) (17). Conversion to digital information reduces the bandwidth required to transmit the video whereby the information is treated like any other IP information. This system relies almost exclusively on *inbound-only* applications as, other than commands to control the camera, there is very little traffic that flows on the outbound.

When a series of sequential pictures is shown rapidly enough, instead of seeing each separate image, the human eyes perceive a smoothly moving animation. This is the basis for film and video. The number of pictures shown per second is called the *frame rate,* quantified in *frames per second.* It takes a frame rate of about 10 frames per second for us to perceive smooth motion. Below that speed, we notice jerkiness. Movies shown in a theatre are filmed and projected at a rate of 24 frames per second. Video shown on television is 30 frames per second in the U.S. and other countries where the standard is NTSC video; and 25 frames per second in Great Britain and parts of Europe, Africa, Asia, and the Middle/East where PAL is the standard.

The quality of the images seen in film and video is not only dependent upon frame rate. The amount of information in each frame is also a factor. This is known as the *resolution* of the image. All other things being equal, a higher resolution will result in a better quality image. Resolution for traditional analog video is represented by the number of horizontal scan lines per image - that is, the number of lines the electron beam draws across the screen - known as vertical resolution. Horizontal resolution is the number of pixels across each scan line. Horizontal resolution varies according to the capability of the video recording device to record the dots and of the video playback device and monitor to display them.

Resolution for digital images, e.g., on computer displays and digital television sets, is represented by the number of individual picture elements (pixels) that are on the screen, and is often expressed as a number of horizontal pixels times the number of vertical pixels, for example 640X480 or 720X480.

The frame rate and the resolution are very important in digital video because they determine how much data needs to be transmitted and stored to view the video. The higher the resolution and frame rate, the better is the quality, but at the cost of a higher bandwidth. There will often be trade-offs between the desire for high quality video and the requirements imposed by bandwidth and storage limitations.

In virtually all cases, when analog video is digitized, it will also be compressed. Compression is necessary because of the enormous amount of data that comprises uncompressed video.

A single frame of uncompressed video takes about 1 megabyte (MB) of space to store. This can be calculated by multiplying the horizontal resolution (say 720 pixels) by the vertical resolution (486 pixels), and then multiplying by 3 bytes for the color information. At the standard video rate of 30 frames per second, this would result in around 30 MB of storage required for each and every second of uncompressed video! It would take over 1.5 gigabytes (GB) to hold a minute of uncompressed video!

The goal of compression is to reduce the data rate, while still keeping the image quality high. The amount of compression used depends on how the video will be used. The popular DV25 format (used in most camcorders) compresses at a 5:1 ratio (i.e. the video is compressed to one-fifth of its original size). Video you access on the Web might be compressed at 50:1 or even more.

There are many different ways of compressing video. One method is to simply reduce the size of each video frame. A 320x240 image has only one-fourth the number of pixels as a 640x480 image. Or the frame rate of the video could be reduced. A 15 frame-per-second video has only half the data of a 30 frame-per-second video. This is, however, not enough.

The human eye is much more sensitive to changes in the luminance of an image than to change in the color. Almost all video compression schemes take advantage of this characteristic of human perception. These schemes work by discarding much of the color information in the picture. As long as this type of compression is not too severe, it is generally unnoticeable. In fact, in even the highest quality uncompressed video used by broadcasters, some of the original color information has been discarded.

When each frame of video is compressed separately, the type of compression is known as intraframe or spatial compression. Conversely, some video compression systems utilize what is known as interframe or temporal compression. Interframe compression takes advantage of the fact that any given frame of video is probably very similar to the frames around it. So, instead of storing entire frames, we can store just the differences between certain frames.

MPEG stands for the Motion Pictures Expert Group, an organization of film and video professionals involved in establishing industry standards; 2 refers to "compression standard version 2." MPEG-2 can provide extremely high-quality video. The MPEG-2 video format includes a sophisticated codec (the element that handles compression and decompression of the video) that performs both intraframe (a.k.a. spatial) compression and interframe (a.k.a. temporal) compression. Intraframe compression reduces the amount of data within individual frames, by removing color information that will be undetectable by the human eye. Interframe compression reduces the amount of data by replacing some frames with mathematical predictions or interpolations based on preceding and (sometimes) following frames.

MPEG-2 compression generates three different types of frames: I frames. P frames, and B-frames. I frames (which serve as the key-frames in MPEG-2) take advantage of intraframe compression, reducing the amount of information within the individual frames through color sampling. I frames preserve more information than P or B frames and are, therefore, the largest, in terms of the amount of data needed to describe them. P frames are predicted frames, computed from previous frames, and may require less than a tenth of the data needed for I frames. B frames, or bi-directional frames, are interpolated from both previous frames and those that follow. B frames can be even smaller than P frames. A typical MPEG-2 sequence might look something like this:
IBBPBBPBBPBBPPB

How each frame is compressed depends on the type of content. If the content is fairly static, for example, a talking head shot against a plain, still background where not much changes from frame to frame, then few I frames will be needed, and the video can be compressed into a relatively small amount of data. But if the content is action-oriented, for example, a soccer game, where either the action or the background moves or changes rapidly or dramatically from frame to frame, then more I frames are required, a greater amount of data is needed to maintain good quality and, therefore, the video cannot be compressed as much.

MPEG-4 is the designation for a group of audio and video coding standards and related technology agreed upon by the Moving Picture Experts Group (MPEG). The primary uses for the MPEG-4 standard are web (streaming media), CD distribution, conversational (videophone), and broadcast television. MPEG-4 treats compression differently than MPEG-2. Because of this compression difference, MPEG-4 video output offers higher image quality at much smaller file sizes than MPEG-2 is capable of. MPEG-4 compresses files in a range from 5Kbps to 10Mbps making it adaptable for delivering video to everything from cell phones to HD quality output. Instead of interpreting each individual frame of video, MPEG-4 compresses images by dealing with objects in the video, meaning it efficiently reuses image information without throwing away as much image data.

Customers who need a video surveillance solution typically fall into one of the following three categories. Governments, for armies and army like organizations, governments, for non-army organizations and agencies, e.g.; border control and customs, and enterprises. The first two categories will typically need high performance cameras for surveillance purposes, with advanced optics and night vision capabilities. Other features may include sophisticated event detection and automatic object tracking capabilities. Equipment will need to be hardened for operation in field conditions. The third category may need video surveillance for security purposes and/or operational purposes. The latter means, for example, taking an action based on visual verification of field conditions at a remote site. This category may include governmental bureaus and agencies who deal with natural resources, infrastructure, energy etc.

Lighting conditions also affect configuration of a system. A camera is a passive element that needs light to generate a picture. If night vision (at complete darkness) is required, special cameras will be needed. Daylight vision cameras are much simpler and cheaper, differing in various parameters. Again, sensitivity to light is important and there are cameras characterized as "low-light" or "dawn to dusk". Here too, understanding the exact requirements, as well as on-site conditions (artificial lighting, shading etc.) would result in an optimal solution.

A fixed camera points to a specific direction and that is the only picture the camera can capture, e.g. a building's door, or a section of a perimeter fence. A steerable camera allows the operator to monitor the space around the camera by sending steering commands. There are two basic types of steerable cameras - Pan/Tilt ("PT") and Dome. PT cameras are more expensive, and allow viewing above the point where the camera is installed. Dome cameras can only view points below the point of installation. Any type of camera may be equipped with an optical zoom and auto focus capabilities.

Video quality is very important in a satellite communication environment, as it directly determines the bandwidth required to transmit the video. Video quality is a very subjective term, and can not be quantified in an objective way. The reasons for this are (a) the number of parameters influence the quality, and (b) non-linearity of the video compression process. The required quality of the video depends on the specific application. Generally speaking, applications that require detailed pictures of moving objects will require more bandwidth than those taking picture of static scenery.

The method a customer uses the system can significantly affect the configuration of the system. For example, for a customer who needs to monitor 300 unmanned sites for security and any other unusual events where most of the time nothing of significance happens, there is no real need to relay any video. Moreover, there is no practical way to watch 300 different video streams. In this case, it may be best for the customer to specify a number, say 4 to 6, of cameras that will transmit video at any given moment. This number shall be based on operational considerations. The result is that the average cost per site is the cost of the bandwidth consumed by those 4 to 6 cameras, divided by 300. There is a question, of course, how to select the specific cameras that transmit the video. At the moment of an event, a camera can be triggered by a sensor (e.g. motion, crossing of an IR beam, etc.), or using video motion detection. If no event is happening, then cameras can be simply polled at a predetermined order.

In another example, suppose a customer is using cameras for security at a site that is an hour drive from the control room. In case of an intrusion event there is very little that can be done in real time. All the customer really needs is to be able to identify the unusual event, something that can be done a low bit rate and to start an event handling procedure. Then the event can be locally recorded (at the remote site) at high quality and the file can be sent for post event analysis. The video can be recorded onto a computer hard disk or on a portable media such as CDs or flash drives. The video may be periodically dumped into an archive file.

Video Motion Detection (VMD) is a sophisticated feature, based on processing of the image captured by the camera and is designed to set off an alarm once a motion is detected. In fact, this is far more than detecting simple motion. VMD is used to detect motion with very specific characteristics, e.g. motion in a certain direction and area, within a range of speeds, of objects having a certain size, and so on. This feature is required, for example, for detecting a person approaching a restricted area, while in the background there is car traffic, and where the person is walking in a moving shade of trees. Having such a feature in a system limits space segment consumption only to those instances where it absolutely required.

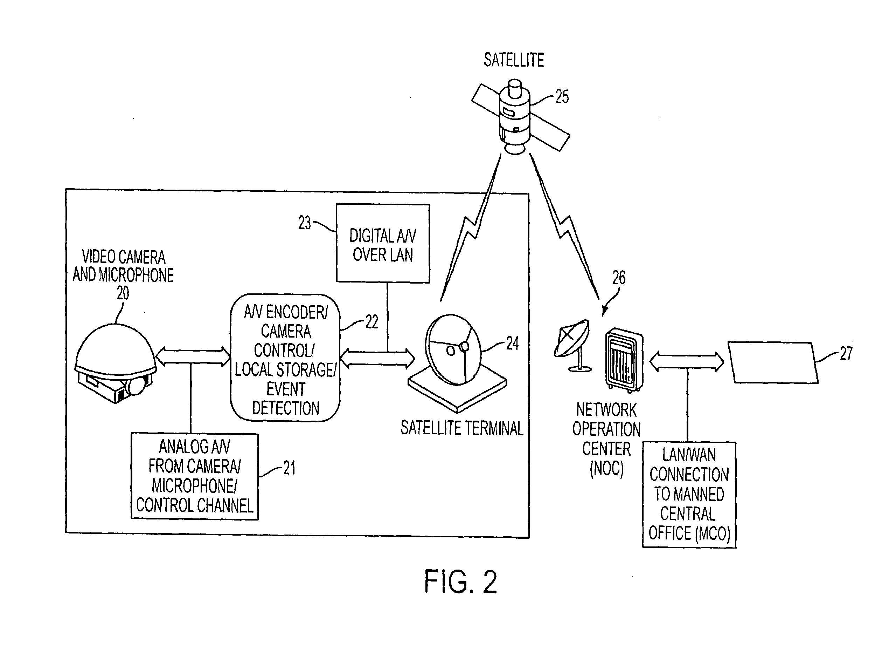

FIG. 2 is a schematic view of an alternative aspect of a video surveillance system using satellite communications. In this aspect, an audio/visual surveillance uses directional microphones and remotely controlled steerable video camera(s) (20). The camera may be operated in daylight or in full darkness, if required. The camera and microphone provide on-site audio and visual recording. Local video and audio recording may be archived for later retrieval. The system can support any video camera with an analog output with user defined video quality (resolution, frame-per-second). For example, the audio/visual surveillance can provide high performance video.

Multiple cameras may be used per site. The cameras may be hardwired together or use wireless connections. The video from each camera can be recorded onto a computer hard disk or on a portable media such as CDs or flash drives. The video may be periodically dumped into an archive file.

The audio/visual surveillance can include high performance video and audio outdoor event detection. Detection rules may be programmed based on object size, velocity, direction of movement or whether an object has been added or removed from the scene. In the case of traffic cameras, the detection rules may be programmed for detecting unusual traffic patterns: congestion, and/or driving in the wrong direction. Ideally, a high performance, low false alarm rate Video Motion Detection (VMD) is used.

Additional sensors may be used to trigger an alarm. Such sensors could fire detectors, smoke detectors, carbon monoxide detectors, infrared beam crossing detectors, vibration detectors, and gate or door open/closure detectors.

The system may include options for proactive measures such as intense illumination and loudspeakers that can be controlled and operated from the MCO; and operating non-lethal measures such as tear-gas dispensers.

The video and microphone apparatus may be suitable for indoor or outdoor use, or both. The audio/visual surveillance system may include a weatherproof enclosure housing all electronic parts. In addition, solar power supply may be utilized to provide power to the cameras and microphones. Ideally, the system is set up for easy installation by non-professional personnel.

The analog audio/visual output (21) from the microphone/camera is transmitted to an A/V digital encoder (22) converts real-time analog video to compressed, digital video (23) using a suitable standard, for example state of the art MPEG4 encoding. The encoder also converts real-time analog audio to compressed, digital audio using suitable G.711/G.729A standards. The analog video camera may connect directly to video encoder such that no additional equipment is required.

Thus, aspects of the system include integration of a satellite modem with A/V digital encoder, video event detection algorithm, suitable for outdoor environment and local video recording and archiving system.

The digital video and audio are transmitted to a satellite (25) via a satellite terminal (24). Satellite broadband connectivity, including satellite modem and antenna. Additional connectivity may be added for voice/phone line and/or data lines.

All surveillance devices and sensors may transmit their A/V streams and sensor indications over the satellite, to a satellite Network Operation Center (NOC) (26). The satellite network management algorithms and software may be optimized to make an efficient use of the satellite space-segment, while maintaining quality and integrity of the transmitted information. The NOC and the Manned Central Office (MCO) (27) may or may not be co-located. A terrestrial high-speed communication line may connect the NOC with the MCO, providing the information from all remote sites, as well as satellite network status. An Operator Control Console (OCC), which is essentially a PC running dedicated control software, provides simple means to control the entire surveillance system, including all features of the remote sites. The design provides northbound interfaces to standard control room management software packages.

In addition, the system will include a satellite communication network optimization for transmission of digital video. The system will further include integration of suitable control software.

A shared bandwidth pool to minimize communication costs per site. Bandwidth-on-demand algorithm guarantees video quality and minimum use of the satellite bandwidth. SCADA traffic can be supported as well, using the same satellite terminal

While the invention has been described in connection with various example structures and illustrative aspects, it will be understood by those skilled in the art that other variations and modifications of the structures and aspects described above may be made without departing from the scope of the invention. Other structures and aspects will be apparent to those skilled in the art from a consideration of the specification or practice of the invention disclosed herein. It is intended that the specification and the described examples only are illustrative with the true scope of the invention.

## Claims

1. A satellite system comprising:
a remote VSAT terminal;
a video camera producing a video stream;
measures for detecting an anomaly and modifying the video stream responsive to the anomaly;
a compression algorithm and hardware for compressing the video;
a hub processing center receiving a plurality of video streams from different remote locations;
an algorithm to process bandwidth requests from the remote terminals, based on triggers generated at the remote sites; and
software and hardware to manage a shared pool of frequency and time resources, granting them per requests from the remote sites.

2. A satellite surveillance system comprising:
at least one analog video camera for recording a video stream in a remote location;
an encoder connected to the analog video camera to convert the video stream to digital video information;
a device to detect an anomaly in the vicinity of the analog video camera,
a remote VSAT terminal connected to the encoder to transmit the digital video stream from the remote location to a satellite based on detection of an anomaly by the device to detect an anomaly; wherein the digital video stream is transmitted based on an algorithm to process bandwidth requests from the remote terminal; and
a hub processing center for receiving the digital video information, wherein digital video information may be received from a plurality of digital video streams from different remote locations.

3. The satellite surveillance system of claim 2 wherein the encoder converts the analog video information to MPEG4 digital video.

4. The satellite surveillance system of claim 2 or claim 3 wherein the device to detect an anomaly utilizes video motion detection.

5. The satellite surveillance system of claim 2 or claim 3 wherein the device to detect an anomaly is selected from the group consisting of fire detector, smoke detector, carbon monoxide detector, infrared beam crossing detector, vibration detector, and gate or door open/closure detector.

6. The satellite surveillance system of claim 2 wherein the at least one video camera continually records and stores high quality video.

7. The satellite surveillance system of any one of claims 2 to 6 comprising a plurality of video cameras, each camera at a different remote location.

8. The satellite surveillance system of any one of claims 2 to 7 wherein the analog video camera is selected from a dome or a pan/tilt video camera.

9. The satellite surveillance system of any one of claims 2 to 8 wherein the digital video stream is accessed from the hub from a site remote from the hub.

10. The satellite surveillance system of any one of claims 2 to 8 wherein the digital video stream is accessed over a secured internet connection.

11. The satellite surveillance system of any one of claims 2 to 10 wherein the detector includes image processing software.

12. A method of operating a satellite surveillance system comprising:
recording a video stream in a remote location with a analog video camera;
converting the analog video stream to digital video information;
detecting an anomaly in the vicinity of the analog video camera,
upon detecting an anomaly, generating a request for a dedicated transmission channel in order to transmit digital video information via satellite from the remote location to a hub processing center;
processing the request at the hub processing center;
granting permission for the dedicated transmission channel; and
transmitting the digital video information.

13. The method of claim 12 wherein the hub processing center receives digital video information from a plurality of digital video streams from different remote locations.

14. The method of claim 12 or claim 13 wherein the processing of the request is based on an algorithm to process bandwidth requests from the remote terminal.

15. The method of any one of claims 12 to 14 further comprising operating the camera via connection through the hub.
